# EUROPEAN PATENT APPLICATION

(11) **EP 4 325 597 A1**
(43) Date of publication of application: **21.02.2024**
(21) Application number: 22940938.8
(22) Date of filing: 29.08.2022
(51) Int. Cl.: H01M 4/134, H01M 4/62

(54) **NEGATIVE ELECTRODE PLATE AND LITHIUM-METAL BATTERY**

(30) Priority: 01.07.2022 CN 202221687796 U
(71) Applicant: Eve Energy Co., Ltd., Huizhou, Guangdong 516006 (CN)
(72) Inventor: FU, Hongli, Huizhou, Guangdong 516006 (CN); SUN, Peiling, Huizhou, Guangdong 516006 (CN); CAO, Lang, Huizhou, Guangdong 516006 (CN); ZHU, Yuan, Huizhou, Guangdong 516006 (CN)
(74) Representative: Herrero & Asociados, S.L.
(86) International application number: PCT/CN2022/115473
(87) International publication number: WO 2024/000784

(57) **Abstract**

The present application relates to a negative electrode plate and a lithium metal battery. The lithium metal battery includes a steel can; a core disposed inside the steel can, the core is formed by winding a positive electrode plate, a separator, and a negative electrode plate, the negative electrode plate is made of lithium metal, and a metal reinforcement structure is embedded in the negative electrode plate; a negative electrode tab, a first end of the negative electrode tab is connected to the negative electrode plate, and a second end of the negative electrode tab is welded to an inner wall of the steel can; a positive electrode tab, a first end of the positive electrode tab is connected to the positive electrode plate; a cap, a second end of the positive electrode tab is welded to the cap; an insulation assembly arranged at both ends of the core.

## Description

This application claims priority to Chinese Patent Application No. 202221687796.9, filed in the China National Intellectual Property Administration on July 1, 2022, which is incorporated herein by reference in its entirety.

### TECHNICAL FIELD

The present application relates to a field of battery, for example, to a negative electrode plate and a lithium metal battery.

### BACKGROUND

Lithium metal batteries are widely used in 5G, security, smart meters and other fields because of their high energy/power density, low self-discharge rate and long life. Generally, in order to ensure the stability of discharge process of a rolled lithium metal battery or a stacked lithium metal battery, a metal tab is spot welded onto a positive electrode plate for current collection, and a metal tab is spot welded or riveted onto a negative electrode plate for current collection, thereby ensuring the normal use of the battery under normal conditions. However, when the application of low current is encountered, partial positions of a negative tab or weak points at the connection between the negative tab and a negative electrode plate are prone to preferential reaction or overreaction, which leads to the early failure of the battery. Moreover, the thinner the thickness of a lithium metal negative electrode, the easier the failure will occur.

Therefore, a negative electrode plate and a lithium metal battery are needed to solve the above problems.

### SUMMARY

The present application provides a negative electrode plate and a lithium metal battery, which can avoid fracture failures of partial positions of the negative electrode plate and weak points at the connection between a negative electrode tab and the negative electrode plate, ensure the stability of an electrode plate in the battery, and improve the stability of battery discharge.

The present application adopts the following technical solutions:

A negative electrode plate, wherein the negative electrode plate is made of lithium metal, and a metal reinforcement structure is embedded in the negative electrode plate.

A lithium metal battery including:
a steel can, wherein the steel can includes a hollow containing cavity;
a core, wherein the core is disposed inside the steel can, and the core is formed by winding a positive electrode plate, a separator, and the aforementioned negative electrode plate;
a negative electrode tab, wherein a first end of the negative electrode tab is connected to the negative electrode plate, and a second end of the negative electrode tab is welded to an inner wall of the steel can;
a positive electrode tab, wherein a first end of the positive electrode tab is connected to the positive electrode plate;
a cap, wherein the cap is disposed at an opening of the steel can, and a second end of the positive electrode tab is welded to the cap;
an insulation assembly, wherein the insulation assembly is arranged at both ends of the core, and the insulation assembly is arranged to isolate the core from the steel can.

### BRIEF DESCRIPTION OF FIGURES

FIG. 1 is a cross-sectional view of a lithium metal battery according to the present application;
FIG. 2 is a schematic diagram of a positive electrode tab in a lithium metal battery according to the present application;
FIG. 3 is a schematic diagram of a negative electrode plate in a lithium metal battery according to the present application;
FIG. 4 is another schematic diagram of a negative electrode plate in a lithium metal battery according to the present application.

In the figures:
1, first insulation ring; 2, positive electrode plate; 3, negative electrode plate; 4, separator; 5, steel can; 6, positive electrode tab; 61, conductive portion; 62, welding portion; 7, negative electrode tab; 8, second insulation ring; 9, cap; 91, positioning portion; 92, connecting portion; 10, metal reinforcement structure core.

### EMBODIMENTS OF THE PRESENT APPLICATION

Technical solutions in the present application will be described below in conjunction with drawings and embodiments of the present application. It can be understood that, the specific embodiments described here are only for the purpose of explaining the present application and should not be considered as limiting the scope of the present application. Additionally, it should be noted that, for the sake of clarity, the accompanying drawings only show relevant parts related to the present application, rather than the entire structure.

In the description of the present application, it should be noted that, unless otherwise expressly specified and limited, terms such as "installation," "connection", and "connect" should be broadly interpreted. For example, they can refer to both fixed connections, detachable connections, mechanical connections, electrical connections, direct connections, indirect connections through intermediate media, and connections within the components. Ordinary skilled in the art can understand the specific meanings of these terms in the context of the present application based on the specific circumstances.

In the present application, unless otherwise expressly specified and limited, a first feature "above" or "below" a second feature may include direct contact of the first feature and the second feature, or may include contact of the feature and the second feature not directly but through additional features between them. Moreover, when describing the first feature "above," "on top," or "over" the second feature, it can refer to the first feature being directly above or diagonally above the second feature, alternatively, it can simply indicate that the first feature is at a higher horizontal level than the second feature. When describing the first feature "below," "underneath", or "beneath" the second feature, it can refer to the first feature being directly below or diagonally below the second feature, alternatively, it can simply indicate that the first feature is at a lower horizontal level than the second feature.

Lithium metal batteries are widely used in 5G, security, smart meters and other fields because of their high energy/power density, low self-discharge rate and long life. Generally, in order to ensure the stability of discharge process of a rolled lithium metal battery or a stacked lithium metal battery, a metal tab is spot welded onto a positive electrode plate for current collection, and a metal tab is spot welded or riveted onto a negative electrode plate for current collection, thereby ensuring the normal use of the battery under normal conditions.

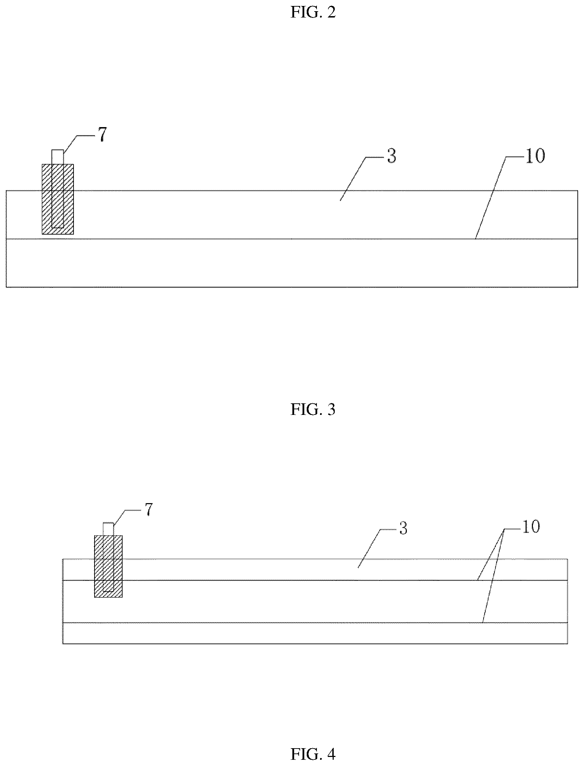

In order to avoid fracture failures of partial positions of the negative electrode plate and weak points at the connection between a negative electrode tab and the negative electrode plate, ensure the stability of an electrode plate in the battery, and improve the stability of battery discharge, the present application provides a negative electrode plate, as is shown in FiG.3 to FiG.4. The negative electrode plate 3 is made of lithium metal, and a metal reinforcement structure 10 is embedded in the negative electrode plate 3. By embedding the metal reinforcement structure 10 in the negative electrode plate 3 that made of lithium metal, the strength of the negative electrode plate 3 can be improved, thereby avoiding fracture failure of the negative electrode plate 3.

For example, the metal reinforcement structure 10 includes a metal wire, a metal mesh, and/or a metal foil. By embedding the metal reinforcement structure 10 in the negative electrode plate 3, the strength of the negative electrode plate 3 can be improved. In other embodiments, the metal reinforcement structure 10 is not limited to the metal wire, the metal mesh, or the metal foil, it can be designed in various shapes according to actual needs, which is not limited herein.

For example, a thickness of the metal reinforcement structure 10 is smaller than a thickness of the negative electrode plate 3. With the above arrangement, it is possible to ensure that the metal reinforcement structure 10 is effectively embedded in the negative electrode plate 3 without causing excessive influence on the performance of the negative electrode sheet 3. In an embodiment, a material of the metal reinforcement structure 10 may be a metal such as copper, iron, and nickel or the like. Additionally, the metal reinforcement structure 10 can be set as one or more within the negative electrode plate 3, which is not limited herein.

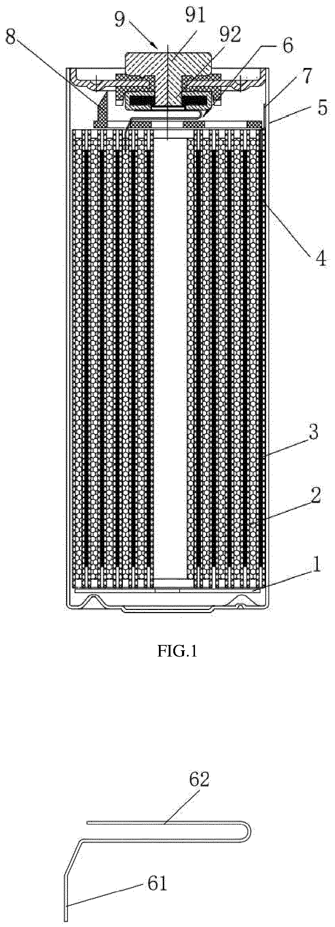

Referring to FiG. 1 to FiG. 4, the present application further provides a lithium metal battery. The lithium metal battery includes a steel can 5, a core, a negative electrode tab 7, a positive electrode tab 6, a cap 9, and an insulation assembly.

Wherein, the steel can 5 includes a hollow containing cavity. The core is disposed inside the steel can 5, and the core is formed by winding a positive electrode plate 2, a separator 4, and a negative electrode plate 3. The negative electrode plate 3 is made of lithium metal, and a metal reinforcement structure 10 is embedded in the negative electrode plate 3. An end of the negative electrode tab 7 is connected to the negative electrode plate 3, and another end of the negative electrode tab 7 is welded to an inner wall of the steel can 5. An end of the positive electrode tab 6 is connected to the positive electrode plate 2. The cap 9 is disposed at an opening of the steel can 5, and another end of the positive electrode tab 6 is welded to the cap 9. The insulation assembly is arranged at both ends of the core to isolate the core from the steel can 5.

By embedding the metal reinforcement structure 10 in the negative electrode plate 3 that made of lithium metal, the structure strength of the negative electrode plate 3 can be improved, thereby avoiding fracture failure of the negative electrode plate 3. By welding the negative electrode tab 7 to the steel can 5, the negative electrode tab 7 can be supported, thereby avoiding fracture failure of a weak point at the connection between the negative electrode tab 7 and the negative electrode plate 3. By welding the positive electrode tab 6 and the cap 9, the stability of the connection between the positive electrode tab 6 and the cap 9 is ensured. By ensuring the stability of the positive electrode tab 6 and the negative electrode tab 7 in the battery, the stability of the battery discharge is improved.

For example, a cross section of the cap 9 is a T-shaped. The cap 9 includes a positioning portion 91 and a connecting portion 92 which are connected to each other. The positioning portion 91 protrudes relative to the steel can 5, and the connecting portion 92 is welded to the positive electrode tab 6. According to the above design, it can ensure a stable connection between the cap 9 and the positive electrode tab 6, and at the same time, it is convenient to press-fit on the steel can 5. It can further ensure the structural stability of the lithium metal battery formed after the press-fitting.

For example, the insulation assembly includes a first insulation ring 1. The first insulation ring 1 is disposed in the steel can 5 and located at the bottom of the containing cavity. The first insulation ring 1 is configured to isolate the core from the steel can 5. By arranging the first insulating ring 1, it can ensure insulation between the core and the steel can 5, thereby ensuring the normal operation of the lithium metal battery.

For example, the insulation assembly includes a second insulation ring 8. The second insulation ring 8 is disposed between the core and the cap 9. The second insulation ring 8 is configured to isolate the steel can 5 from the core. By arranging the second insulation ring 8, it can ensure insulation between the core and the steel can 5, and can ensure insulation between the cap 9 and the negative electrode plate 3, thereby ensuring the normal operation of the lithium metal battery.

For example, the second insulation ring 8 is opened with a through hole, and the positive electrode tab 6 is welded to the cap 9 through the through hole. By opening the through hole on the second insulation ring 8, the difficulty of welding the positive electrode tab 6 to the cap 9 is reduced, which is convenient for the production and assembly of the lithium metal battery.

For example, the positive electrode tab 6 includes a conductive portion 61 and a welding portion 62 which are connected to each other. The conductive portion 61 is connected to the positive electrode plate 2, the welding portion 62 is protruded relative to the through hole, and the welding portion 62 is welded to the cap 9. For example, in the embodiments, the welding portion 62 is a U-shaped. The conductive portion 61 can ensure that the positive electrode tab 6 and the positive electrode sheet 2 are stably connected. The welding portion 62 can ensure that the positive electrode tab 6 and the cap 9 are stably connected. Since the welding portion 62 is welded to the cap 9, the strength of the connection between the positive electrode tab 6 and the cap 9 can be ensured, thereby ensuring the stability of the battery. Moreover, since the welding portion 62 is U-shaped which is convenient to weld with the cap 9. After the cap 9 is welded, since the welding portion 62 has a certain length, the cap 9 can be displaced to facilitate the injection of an electrolyte into the steel can 5. In other embodiments, the welding portion 62 may be designed to be a Z-shaped or other shapes, which is not limited herein.

For example, the steel can 5 is filled with electrolyte to ensure that the battery can work effectively.

An internal structure of the lithium metal battery provided by the embodiments is stable, which can avoid the fracture failures of partial positions of the negative electrode plate 3 and the weak points at the connection between the negative electrode tab 7 and the negative electrode plate 3 when discharging at a small current, thereby ensuring the stability of the electrode plate in the battery and the stability of the discharge of the battery during use, improving the reliability of the battery in practical application, and avoiding the hidden danger brought by the early failure of the battery to users, especially in the security industry. The internal structure of the lithium metal battery provided by the embodiments is stable, which can increase the current collecting effect of the negative electrode, thereby improving the output ability of the lithium metal battery at different magnification. The internal structure of the lithium metal battery provided by the embodiments is stable, which can further improve the utilization rate of metal lithium and reduce the material cost. The structure can be applied to the structural design of all metal lithium batteries, including alloy lithium batteries, and the shape of lithium metal batteries can be cylindrical batteries, square batteries, or specialshaped batteries.

## Claims

1. A negative electrode plate, wherein the negative electrode plate (3) is made of lithium metal, and a metal reinforcement structure (10) is embedded in the negative electrode plate.

2. The negative electrode plate according to claim 1, wherein the metal reinforcement structure (10) comprises at least one of a metal wire, a metal mesh, and a metal foil.

3. The negative electrode plate according to claim 1, wherein a thickness of the metal reinforcement structure (10) is smaller than a thickness of the negative electrode plate (3).

4. The negative electrode plate according to claim 2, wherein a thickness of the metal reinforcement structure (10) is smaller than a thickness of the negative electrode plate (3).

5. A lithium metal battery comprising:
a steel can (5), wherein the steel can (5) comprises a hollow containing cavity;
a core, wherein the core is disposed inside the steel can (5), and the core is formed by winding a positive electrode plate (2), a separator (4), and a negative electrode plate (3) according to claim 1;
a negative electrode tab (7), wherein a first end of the negative electrode tab (7) is connected to the negative electrode plate (3), and a second end of the negative electrode tab (7) is welded to an inner wall of the steel can (5);
a positive electrode tab (6), wherein a first end of the positive electrode tab (6) is connected to the positive electrode plate (2);
a cap (9), wherein the cap (9) is disposed at an opening of the steel can (5), and a second end of the positive electrode tab (6) is welded to the cap (9);
an insulation assembly, wherein the insulation assembly is arranged at both ends of the core, and the insulation assembly is arranged to isolate the core from the steel can (5).

6. The lithium metal battery according to claim 5, wherein the metal reinforcement structure (10) comprises at least one of a metal wire, a metal mesh, and a metal foil.

7. The lithium metal battery according to claim 5, wherein a thickness of the metal reinforcement structure (10) is smaller than a thickness of the negative electrode plate (3).

8. The lithium metal battery according to claim 6, wherein a thickness of the metal reinforcement structure (10) is smaller than a thickness of the negative electrode plate (3).

9. The lithium metal battery according to claim 5, wherein a cross section of the cap (9) is a T-shaped, the cap (9) comprises a positioning portion (91) and a connecting portion (92) which are connected to each other, the positioning portion (91) protrudes relative to the steel can (5), and the connecting portion (92) is welded to the positive electrode tab (6).

10. The lithium metal battery according to claim 5, wherein the insulation assembly comprises a first insulation ring (1), the first insulation ring (1) is disposed in the steel can (5) and located at the bottom of the containing cavity, and the first insulation ring (1) is arranged to isolate the core from the steel can (5).

11. The lithium metal battery according to claim 5, wherein the insulation assembly comprises a second insulation ring (8), the second insulation ring (8) is disposed between the core and the cap (9), and the second insulation ring (8) is arranged to isolate the steel can (5) from the core.

12. The lithium metal battery according to claim 11, wherein the second insulation ring (8) is opened with a through hole, and the positive electrode tab (6) is welded to the cap (9) through the through hole.

13. The lithium metal battery according to claim 12, wherein the positive electrode tab (6) comprises a conductive portion (61) and a welding portion (62) which are connected to each other, the conductive portion (61) is connected to the positive electrode plate (2), the welding portion (62) is protruded relative to the through hole, and the welding portion (62) is welded to the cap (9).

14. The lithium metal battery according to claim 13, wherein the welding portion (62) is a U-shaped.

15. The lithium metal battery according to claim 6, wherein a cross section of the cap (9) is a T-shaped the cap (9) comprises a positioning portion (91) and a connecting portion (92) which are connected to each other, the positioning portion (91) protrudes relative to the steel can (5), and the connecting portion (92) is welded to the positive electrode tab (6).

16. The lithium metal battery according to claim 7, wherein a cross section of the cap (9) is a T-shaped, the cap (9) comprises a positioning portion (91) and a connecting portion (92) which are connected to each other, the positioning portion (91) protrudes relative to the steel can (5), and the connecting portion (92) is welded to the positive electrode tab (6).

17. The lithium metal battery according to claim 8, wherein a cross section of the cap (9) is a T-shaped, the cap (9) comprises a positioning portion (91) and a connecting portion (92) which are connected to each other, the positioning portion (91) protrudes relative to the steel can (5), and the connecting portion (92) is welded to the positive electrode tab (6).

18. The lithium metal battery according to claim 6, wherein the insulation assembly comprises a first insulation ring (1), the first insulation ring (1) is disposed in the steel can (5) and located at the bottom of the containing cavity, and the first insulation ring (1) is arranged to isolate the core from the steel can (5).

19. The lithium metal battery according to claim 7, wherein the insulation assembly comprises a first insulation ring (1), the first insulation ring (1) is disposed in the steel can (5) and located at the bottom of the containing cavity, and the first insulation ring (1) is arranged to isolate the core from the steel can (5)

20. The lithium metal battery according to claim 8, wherein the insulation assembly comprises a first insulation ring (1), the first insulation ring (1) is disposed in the steel can (5) and located at the bottom of the containing cavity, and the first insulation ring (1) is arranged to isolate the core from the steel can (5).
